# EUROPEAN PATENT APPLICATION

(11) **EP 2 574 006 A1**
(43) Date of publication of application: **27.03.2013**
(21) Application number: 11782947.3
(22) Date of filing: 18.05.2011
(51) Int. Cl.: H04L 29/08

(54) **CLOUD SERVICE CONSUMING METHOD, CLOUD SERVICE PACKET, CLOUD SERVICE BROKER AND CLOUD SYSTEM**

(30) Priority: 20.05.2010 CN 201010189414
(71) Applicant: ZTE Corporation, Shenzhen, Guangdong 518057 (CN)
(72) Inventor: SHAO, Weixiang, Shenzhen Guangdong 518057 (CN)
(74) Representative: Jansen, Cornelis Marinus
(86) International application number: PCT/CN2011/074263
(87) International publication number: WO 2011/144030

(57) **Abstract**

This disclosure discloses a cloud service consuming method, a cloud service message packet, a cloud serviced broker and a cloud system. Wherein, the cloud service consuming method comprises: a cloud service broker receives a cloud service consumer request sent by a cloud service requester (S202); the cloud service broker returns a cloud service consumer response to the cloud service requester (S204). Through this disclosure, the problems of wasted system resource and low system efficiency caused as the cloud service requester sends cloud service requests for many times are avoided, the utilization ratio of system resources is effectively improved, and the system efficiency is improved.

## Description

### Field of the Invention

This disclosure relates to the field of communication, and in particular to a cloud service consuming method, a cloud service message packet, a cloud service broker and a cloud system.

### Background of the Invention

As a new method for sharing the infrastructure, cloud computing can connect huge system pools to provide various IT services.

Cloud computing can be usually classified as broad cloud computing and narrow cloud computing. In the above, the broad cloud computing means the delivery and usage pattern of services, and it means getting the needed services through the network according to demand and in an easily extendable way. Such services can be services related to IT, software and internet, and also can be any other services.

At present, as the capability and interface between cloud computing are incompatible, when a cloud service requester (consumer) needs to use the cloud service, the cloud service requester has to send a request to different cloud service providers in order to get the cloud service information of the cloud service providers. If the cloud service provider is unable to provide the cloud service requested by the consumer, the consumer still needs to send a request to other cloud service providers to get the cloud service information till a cloud service provider that can provide the cloud service requested by the consumer. For example, if the consumer needs to use the cloud service provided by Google, but the consumer does not know that such cloud service is available in Google, and then the consumer first requests Amazon for the cloud service. At this moment, as Amazon is unable to provide the cloud service for the consumer, so the consumer can only respectively send a request to other cloud service providers till send a request to Google. It is thus clear that such cloud service access way is inconvenient for the consumer to request and use the cloud service. Also, as the consumer needs to send requests to different cloud service providers for many times, the system resources are wasted, and the system efficiency is low.

### Summary of the Invention

This disclosure provides a cloud service consuming method, a cloud service message packet, a cloud service broker and a cloud system, to solve the problems of wasted system resources and low system efficiency caused as the consumer needs to send requests to different cloud service providers for many times.

According to one aspect of this disclosure, a cloud service consuming method is provided, comprising: a cloud service broker receiving a cloud service consumer request sent by a cloud service requester; and the cloud service broker returning a cloud service consumer response to the cloud service requester.

Preferably, the step that the cloud service broker receiving the cloud service consumer request sent by the cloud service requester comprises: the cloud service broker receiving a cloud service consuming interface message packet sent by the cloud service requester, wherein the message packet carries the cloud service consumer request, and the cloud service consumer request comprises cloud service information requested by the cloud service requester; and the step that the cloud service broker returning a cloud service consumer response to the cloud service requester comprises: the cloud service broker returning a cloud service consuming interface message packet to the cloud service requester, wherein the message packet carries the cloud service consumer response used for indicating cloud service information provided by the cloud service broker, and the cloud service information comprises information of cloud computing services and/or resources provided by a cloud service provider that is selected and/or adapted by the cloud service broker for the cloud service requester.

Preferably, the cloud service requester accesses and/or controls the cloud service provided by the cloud service provider through the cloud service broker, and the accessing and/or controlling of the cloud service provided by the cloud service provider comprises at least one mode of: creating, reading, updating, deleting, executing, copying, moving, selecting and collecting.

Preferably, the cloud service consuming interface message packet comprises information of one of: request information and response information.

Preferably, the cloud service consuming interface message packet is transmitted in at least one mode of: Hyper Text Transport Protocol (HTTP) format, Session Initiation Protocol (SIP) format, Representational State Transfer (REST) format, Simple Object Access Protocol (SOAP) format, Extensible Markup Language (XML)-based Hypertext Markup Language Version 5 (XHTML5) format, Application Programming Interface (API) format, and specific command format.

Preferably, the information contents of the cloud service consuming interface message packet are described in at least one of the following formats: XML, JavaScript Serialized Object Notation (JSON) and specific format.

According to another aspect of this disclosure, a cloud service consuming interface message packet is also provided and applied in information interaction of cloud service consuming between a cloud service broker and a cloud service requester, comprising information of one of: request information and response information.

Preferably, the request information comprises information of at least one of: session information, Infrastructure as a Service (IaaS) information, Data Storage as a Service (Daas) information, Platform as a Service (PaaS) information, and Software as a Service (SaaS) information.

Preferably, the response information comprises information of at least one of: session information, IaaS information, DaaS information, PaaS information, and SaaS information.

Preferably, the cloud service consuming interface message packet is transmitted in at least one mode of: HTTP, SIP, REST, SOAP, XHTML5, API, and specific command format.

Preferably, the information contents of the cloud service consuming interface message packet are described in at least one format of: XML format, JSON format and specific format.

According to still another aspect of this disclosure, a cloud service broker is also provided, comprising: a cloud service consuming interface module, configured to realize the cloud service consuming between the cloud service requester and the cloud service broker, comprising: a receiving module, configured to receive a cloud service consumer request sent by the cloud service requester; and a feedback module, configured to send a cloud service consumer response to the cloud service requester, wherein the cloud service consumer response comprises cloud service information provided by the cloud service broker.

Preferably, the receiving module is configured to receive a cloud service consuming interface message packet sent by the cloud service requester, wherein the message packet carries the cloud service consumer request, and the cloud service consumer request comprises the cloud service information requested by the cloud service requester; and the feedback module is configured to return a cloud service consuming interface message packet to the cloud service requester, wherein the message packet carries the cloud service consumer response used for indicating the cloud service information provided by the cloud service broker, and the cloud service information comprises information of cloud computing services and/or resources provided by a cloud service provider that is selected and/or adapted by the cloud service broker for the cloud service requester.

Preferably, the cloud service consuming interface message packet comprises request information and response information.

Preferably, the request information comprises information of at least one of: session information, IaaS information, DaaS information, PaaS information, and SaaS information; and the response information comprises information of at least one of: session information, IaaS information, DaaS information, PaaS information, and SaaS information.

Preferably, the cloud service consuming interface message packet is transmitted in at least one mode of: HTTP format, SIP format, REST format, SOAP format, XHTML5 format, API format, and specific command format; and information contents of the cloud service consuming interface message packet are described in at least one format of: XML format, JSON format and specific format.

According to yet another aspect of this disclosure, a cloud system is also provided, comprising: a cloud service requester, configured to send a cloud service consumer request to a cloud service broker, wherein the cloud service consumer request comprises cloud service information requested by the cloud service requester; and receive a cloud service consumer response returned by the cloud service broker, wherein the cloud service consumer response comprises cloud service information provided by the cloud service broker; and the cloud service broker, comprising: a cloud service publishing interface module, configured to subscribe to information of cloud computing services and/or resources provided by a plurality of cloud service providers; a cloud service consuming interface module, configured to provide a consuming interface for the cloud service requester to access the cloud service provider; a cloud service processing module, configured to process the cloud service consumer request of the cloud service requester; a cloud service adapting module, configured to adapt the cloud computing services and/or resources provided by the cloud service provider to the cloud service requester according to the cloud service consumer request; and the cloud service provider, configured to publish the cloud service information of the cloud service to the cloud service broker, and provide the cloud service needed by the cloud service requester.

Preferably, the cloud service consuming interface module comprises: a receiving module, configured to receive the cloud service consumer request sent by the cloud service requester, wherein the cloud service consumer request comprises the cloud service information requested by the cloud service requester; and a feedback module, configured to send the cloud service consumer response to the cloud service requester, wherein the cloud service consumer response comprises the cloud service information provided by the cloud service broker.

In this disclosure, the cloud service broker uniformly receives the consumer request from the cloud service requester, and selects and adapts the cloud computing service and/or resource of the proper cloud service provider for the cloud service requester according to the cloud service information of the cloud service provider that the cloud service broker obtained or subscribed to. Therefore, the cloud service requester only needs to send a request once to the cloud service broker to realize the corresponding cloud service access. The problem that the cloud service requester sending cloud service requests for many times causes wasted system resource and low system efficiency is avoided. The utilization ratio of system resources is effectively improved, and the system efficiency is improved.

### Brief Description of the Drawings

Drawings described herein are provided for further understanding of this disclosure and form one part of the application. The exemplary embodiments of this disclosure and descriptions thereof are used for explaining this disclosure and do not constitute improper limit to this disclosure. In the drawings:
Fig. 1 illustrates a usage scenario diagram of a cloud service broker according to the embodiment of this disclosure;
Fig. 2 illustrates a step flow chart of a cloud service consuming method according to the embodiment of this disclosure;
Fig. 3 illustrates a step flow chart of another cloud service consuming method according to the embodiment of this disclosure;
Fig. 4 illustrates a signaling flow chart of the cloud service consuming method according to the embodiment shown in Fig. 3;
Fig. 5 illustrates a structure block diagram of a cloud service broker according to the embodiment of this disclosure; and
Fig. 6 illustrates a structure block diagram of a cloud system according to the embodiment of this disclosure.

### Detailed Description of the Embodiments

This disclosure will be described in details hereinafter with reference to drawings and embodiments. It should be noted that embodiments in the application and features in the embodiments can be combined with each other if there is no conflict.

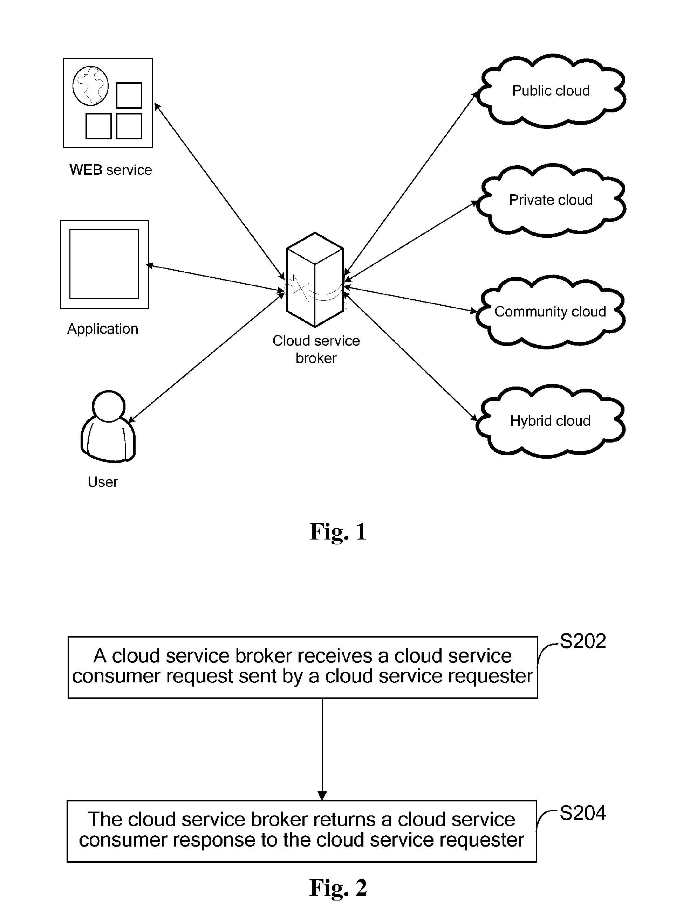

With reference to Fig. 1, a usage scenario diagram of a cloud service broker according to the embodiment of this disclosure is illustrated.

The cloud service broker (also called cloud service gateway) provides brokering services for various cloud service providers, and cloud provided by the cloud service providers can be private cloud, community cloud, public cloud or hybrid cloud. The cloud service broker can provide services including but not limited to arbitration service, proxy service, monitoring service, transition service, porting service, control service, deployment service, shielding service, permutation service, security service and synthesis service or the like between various cloud service providers (cloud computing service providers) such as private cloud, community cloud, public cloud or hybrid cloud and cloud service requesters (consumers) such as WEB service, application or user (enterprise user and individual consumer). The cloud service broker can abstract the incompatible capabilities and interfaces between different cloud computing services, and provide public, open and standard brokering services for consumers. It can solve the problem of incompatibility between different cloud platforms/cloud computing services, provide optimal one-stop services for consumers, and fully meet the demands of consumers.

As shown in Fig. 1, the cloud service broker is located between the cloud service requesters and the cloud service providers. Cloud service requesters such as WEB service, application or user (enterprise user and individual consumer) can access the cloud computing services and/or resources provided by the cloud service providers such as private cloud, community cloud, public cloud or hybrid cloud through the cloud service broker. It can be that the cloud service broker itself is not a cloud computing platform, and the cloud service broker also can be implemented by the cloud computing technology.

The cloud service broker gets information of various cloud computing services and/or resources provided by the cloud service providers through the cloud service publishing function, and stores the information. The cloud service broker selects and/or adapts the cloud computing services and/or resources provided by the proper cloud service providers for the cloud service requesters, so that the cloud service requesters do not have to access different cloud service providers for many times. Thus, on one hand, the cloud service broker provides convenience for the cloud service requesters to use the cloud services, and on the other hand, it also provides a uniform management and usage platform for cloud service information provided by the cloud service providers.

Through the cloud service publishing function, the cloud service broker can subscribe to information of the cloud computing services and/or resources published and supported by the cloud service providers such as private cloud, community cloud, public cloud or hybrid cloud. The cloud service providers such as private cloud, community cloud, public cloud or hybrid cloud can publish a notification of information of the cloud computing services and/or resources supported by themselves to the cloud service broker.

Through the cloud service consuming function, the cloud service broker can, according to the consuming request of the cloud service requesters, select and/or adapt information of the cloud computing services and/or resources published and supported by the cloud service providers such as private cloud, community cloud, public cloud or hybrid cloud.

With reference to Fig. 2, a step flow chart of a cloud service consuming method according to embodiments of this disclosure is illustrated, comprising the following steps.

S202: A cloud service broker receives a cloud service consumer request sent by a cloud service requester; and

the cloud service consumer request comprises cloud service information requested by the cloud service requester, for example, the request for usage of cloud storage service or the like.

S204: The cloud service broker returns a cloud service consumer response to the cloud service requester.

In the above, the cloud service consumer response comprises cloud service information provided by the cloud service broker. That is, the cloud service broker has selected and/or adapted the information of the cloud computing services and/or resources provided by a proper cloud service provider for the cloud service requester. The cloud computing services and/or resources provided by the proper cloud service provider can be real cloud computing services and/or resources of the cloud service provider, and also can be virtual cloud computing services and/or resources, i.e., the cloud computing services and/or resources of the cloud service provider processed by the cloud service broker (such as the services described hereinafter: the proxy service, transition service, porting service, shielding service, permutation service and synthesis service).

According to the cloud service consumer request, the cloud service requester accessing and/or controlling the cloud services provided by the cloud service provider through the cloud service broker can include at least one of the following operation ways: creating, reading, updating, deleting, executing, copying, moving, selecting, collecting or the like. Through the above operations, different demands of the cloud service requester on cloud services are effectively met.

In the related technologies, when the cloud service requester needs cloud services, the cloud service requester can need to access different cloud service providers for many times. As a result, the system resources are wasted, and the system efficiency is low. Through this embodiment, the cloud service broker selects and/or adapts a proper cloud service provider for the cloud service requester according to the stored cloud service information of various cloud service providers, so that the cloud service requester can avoid accessing different cloud service providers for many times. The system resources are effectively saved, and the system efficiency is improved.

The embodiment of this disclosure provides a cloud service consuming interface message packet, which is used by the cloud service requester to access the cloud service.

The cloud service consuming interface message packet is transmitted by using at least one of the following ways: HTTP, SIP, REST, SOAP, XHTML5, API, and specific command. The information contents of the cloud service consuming interface message packet are described in at least one of the following formats: XML, JSON and other specific formats.

The cloud service requester can carry an XML message packet, a JSON message packet or message packets in other specific formats in ways of HTTP, SIP, REST, SOAP, XHTML5, API and specific command, to access and/or control the cloud service and/or resource information provided by the cloud service provider through the cloud service broker.

Further, the cloud service requester accessing and/or controlling the cloud services provided by the cloud service provider through the cloud service broker can include at least one of the following operation ways: creating, reading, updating, deleting, executing, copying, moving, selecting, collecting or the like. When the cloud service requester adopts HTTP, POST, GET, PUT, DELETE, COPY, HEAD, MKCOL, MOVE, OPTIONS or the like can be used.

The specific protocol interface method of the cloud service consuming interface message packet is as follows.

The cloud service consuming interface message packet csb-consumer comprises elements such as request and response.

In the above, <csbconsumer> is a root element, comprising sub-elements such as <CloudServiceRequest> and <CloudServiceResponse>.
(1) Sub-element <CloudServiceRequest> is a cloud service consumer request element, through which the cloud service requester (consumer client) initiates a consumer request to the cloud service broker, comprising one or more of the following attributes and sub-elements:
   sub-element: <session-info>, session information of the cloud service requester consuming the cloud service resources through the cloud service broker;
   sub-element: <IaaS>, Infrastructure as a Service (IaaS) information of the cloud service;
   sub-element: <DaaS>, Data Storage as a Service (DaaS) information of the cloud service;
   sub-element: <PaaS>, Platform as a Service (PaaS) information of the cloud service; and
   sub-element: <SaaS>, Software as a Service (SaaS) information of the cloud service.
(2) Sub-element <CloudServiceResponse> is a cloud service consumer response element, through which the cloud service broker returns a consumer response to the cloud service requester, comprising one or more of the following attributes and sub-elements:
   attribute: status codes, indicating the response statuses, such as 200: OK, 400: syntax error, 408: resources cannot be found, 409: resources cannot be updated, 410: resources cannot be removed, 420: unsupported attribute or element;
   attribute: reason;
   sub-element: <session-info>, session information of the cloud service requester consuming the cloud service resources through the cloud service broker;
   sub-element: <IaaS>, IaaS information of the cloud service;
   sub-element: <DaaS>, DaaS information of the cloud service;
   sub-element: <PaaS>, PaaS information of the cloud service; and
   sub-element: <SaaS>, SaaS information of the cloud service.

In the above,
(A) <session-info> is a session information element, and specifically is session information of the cloud service requester consuming the cloud service resources through the cloud service broker. The cloud service requester can monitor the life cycle that the cloud service broker consumes the cloud service resources. <session-info> is initially returned when <CloudServiceResponse> responds successfully, and <CloudServiceRequest> uses <session-info> to process the session information of the cloud service resources. <session-info> comprises:
   sub-element: <session-id>, cloud service resource session identifier associated with the cloud service requester and the cloud service broker;
   sub-element: <seq>, sequence number;
   sub-element: <expires>, activated duration of the cloud service resources, in unit of second; only used for <CloudServiceResponse>; and
   sub-element: <action>, requested actions: update: update the session, remove: remove the session; only used for <CloudServiceRequest>.
(B) <IaaS> is an infrastructure as a service information element, comprising one or more of the following common attributes and sub-elements:
   <compute>: computing resource sub-element, comprising architecture (CPU architecture) attribute, cores (CPU cores) attribute, hostname attribute, speed (CPU speed) attribute, memory attribute, status attribute (the status of the computing resource), and comprising the supported operations of start, stop, restart and suspend;
   <Network>: network resource sub-element, comprising vlan 802.1q identity attribute, label attribute (label-based vlan), address attribute (network address), gateway attribute (gateway address), allocation attribute (address allocation mechanism), and comprising the supported operations of down and up;
   <Storage>: storage resource sub-element, comprising size attribute (size of drive), status attribute (status of storage resources), and comprising the supported operations of backup, offline, online, resize and snapshot; and
   <Virtualization>: virtualization sub-element, comprising attributes and sub-elements such as DiskSection (disk information), NetworkSection (network information), DeploymentOptionSection (deployment option information), VirtualSystemCollection (virtual system collection information), VirtualSystem (virtual system information) , OperatingSystemSection (operating system information), InstallSection (system install information), ResourceAllocationSection (resource allocation information) and StartupSection (system startup information) and corresponding executed operations.
(C) <DaaS> is a data storage as a service information element, comprising one or more of the following common attributes and sub-elements:
   <DataObject>: data object sub-element, comprising metadata, mimetype, objectURI (universal resource identifier), objectID, parentURI, domainURI, capabilitiesURI, Location, value and the like, and comprising the supported operations of create, read, update, delete and the like;
   <Container>: container sub-element, comprising metadata, objectURI, objectID, parentURI, domainURI, capabilitiesURI, location, exports interface protocol (Open Cloud Computing Interface (OCCI) interface, internet Small Computer System Interface (iSCSI) protocol, Network File System (NFS), and Fiber Channel over Ethernet (FCoE) protocol), snapshots, children and the like, and comprising the supported operations of create, read, update, delete and the like;
   <Domain>: domain sub-element, comprising metadata, objectURI, objectID, parentURI, domainURI, capabilitiesURI, location, children or the like, and comprising the supported operations of create, read, update, delete and the like;
   <Queue>: queue sub-element, comprising metadata, objectURI, objectID, parentURI, domainURI, capabilitiesURI, queueValues, location or the like, and comprising the supported operations of create, read, update, delete and the like; and
   <Capabilities>: capabilities sub-element, comprising cloud storage system-wide capabilities, storage system metadata capabilities, data system metadata capabilities, data object capabilities, container capabilities, domain capabilities and queue object capabilities, and comprising the supported operation of read.
(D) <PaaS> is a platform as a service information element, comprising one or more of the following common attributes and sub-elements:
   <Distributed file system>: distributed file system sub-element;
   <Distributed database>: distributed database sub-element;
   <Distributed cache>: distributed cache sub-element;
   <Distributed computing schedule>: distributed computing schedule sub-element;
   <Session>: session sub-element; and
   <Messaging>: messaging sub-element.
(E) <SaaS> is a software as a service information element, and SaaS can comprise one or more of the following common attributes and sub-element contents:
   communication services, such as short message service, multimedia message service, presence service, chat service, voice call service, video call service, one number service, coloring ring back tone (CRBT), multimedia conference service, and call center service;
   location services, such as location service and landmark service;
   content services, such as video share service, file share service and content sharing service;
   enterprise application services, such as custom resource management service, document management service, business intelligence service, and collaboration service;
   common services, such as authentication service, temporary storage service, poll/voting service, tag service, contacts service, redirect service and calendar service; and
   socialization services, such as blog service, Facebook service and Twitter service.

All of the embodiments of this disclosure can employ the above cloud service consuming interface message packet to realize the access of cloud services. The cloud service requester and the cloud service broker interact with each other by using the above cloud service consuming interface message packets, so that the system compatibility is effectively improved.

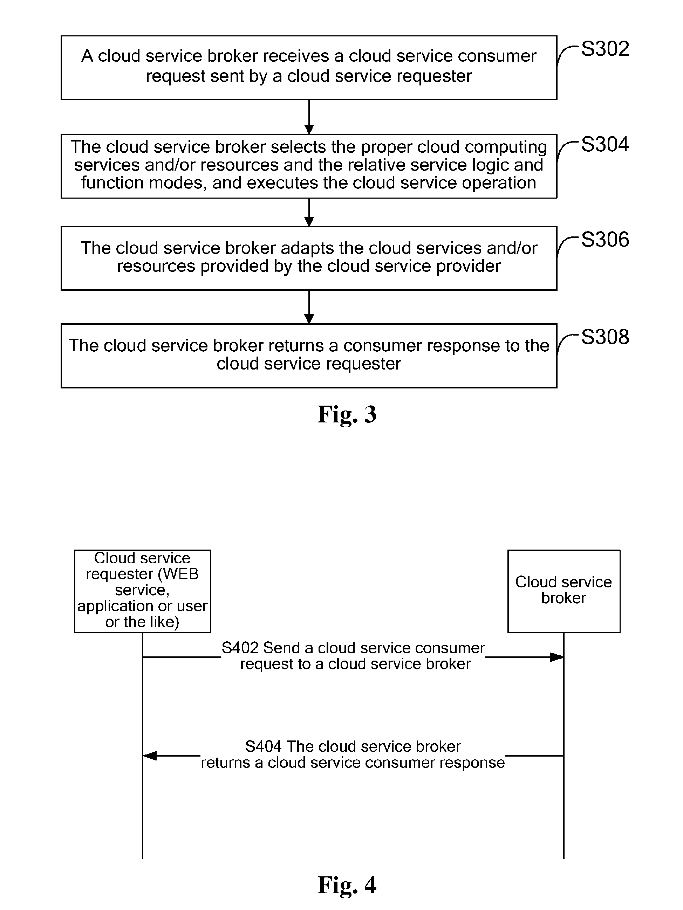

With reference to Fig. 3, a flow chart of another cloud service access method according to embodiments of this disclosure is illustrated, comprising the following steps.

S302: A cloud service broker receives a cloud service consumer request sent by a cloud service requester, and the cloud service consumer request can be carried in the cloud service consuming interface message packet.

The specific message format contents are as follows:

```
   Client- > CSB (consumer request)
   ------------------------------------------
   HTTP POST or SIP INVITE
   Message packet: csb-consumer
   Content-type: application/csb-consumer+xml
   <?xml version="1.0" encoding="UTF-8" standalone="yes"?>
   <csbconsumer version="1.0" xmlns="urn:ietf:params:xml:ns:csb-consumer">
       <CloudServiceRequest>
   <session-info>
                  <session-id>OGX1jCYZ8WBa</session-id>
                <seq>1</seq>
           </session-info>
           <IaaS>
                <compute>
                    <architecture>......</architecture>
                    <cores >......</cores>
                    <hostname>......</hostname>
                    <speed>......</speed>
                    <memory>......</memory>
                    <status>......</status>
                </compute>
                <Network>
                    <vlan>......</vlan>
                    <label>......</label>
                    <address>......</address>
                    <gateway>......</gateway>
                    <allocation>......</allocation>
                </Network>
                <Storage>
                    <size>......</size>
                    <status>......</status>
                </Storage>
                <Virtualization>
                    <DiskSection>......</DiskSection>
                    <NetworkSection>......</NetworkSection>
                    <DeploymentOptionSection>......</DeploymentOptionSection>
                    <VirtualSystemCollection>
                          <VirtualSystem>
                          <OperatingSystemSection>......</OperatingSystemSection>
                              <InstallSection>......</InstallSection>
   </VirtualSystem>
   <ResourceAllocationSection>......</ResourceAllocationSection>
                          <StartupSection>......</StartupSection>
   </VirtualSystemCollection>
                </Virtualization>
           </IaaS>
           <DaaS>
                <DataObject>
                    <metadata>.....</metadata>
                    <objectURI>.....</objectURI>
                    <objectID>.....</objectID>
                    <parentURI>.....</parentURI>
                    <domainURI>.....</domainURI>
                    <capabilitiesURI>.....</capabilitiesURI>
                    <Mimetype>.....</Mimetype>
                    <value>.....</value>
                    <Location>.....</Location>
   </DataObject>
                <Container>
                    <metadata>.....</metadata>
                    <objectURI>.....</objectURI>
                    <objectID>.....</objectID>
                    <parentURI>.....</parentURI>
                    <domainURI>.....</domainURI>
                    <capabilitiesURI>.....</capabilitiesURI>
                    <Location>.....</Location>
                    <exports>.....</exports>
                    <snapshots>.....</snapshots>
                    <children>..... </children>
   </Container>
                <Domain>
                    <metadata>.....</metadata>
                    <objectURI>.....</objectURI>
                    <objectID>.....</objectID>
                    <parentURI>.....</parentURI>
                    <domainURI>.....</domainURI>
                    <capabilitiesURI>.....</capabilitiesURI>
                    <children>..... </children>
                    <Location>.....</Location>
   </Domain>
                <Queue>
                    <metadata>.....</metadata>
                    <objectURI>.....</objectURI>
                    <objectID>.....</objectID>
                    <parentURI>.....</parentURI>
                    <domainURI>.....</domainURI>
                    <capabilitiesURI>.....</capabilitiesURI>
                    <queueValues>.....</queueValues>
   </Queue>
           </DaaS>
           <PaaS>
                <Distributed file system>
                </Distributed file system>
                <Distributed database>
                </Distributed database>
                <Distributed cache>
                </Distributed cache>
                <Distributed computing schedule>
                </Distributed computing schedule>
                <session>
                </session>
                < Messaging>
                </ Messaging>
           </PaaS>
           <SaaS>
                <Custom Resource Management>
                </Custom Resource Management>
                <Video share>
                </Video share>
                <File share>
                </File share>
                <Short Message Service>
                </Short Message Service>
                <Multimedia Message Service>
                </Multimedia Message Service>
           </SaaS>
       </CloudServiceRequest>
   </csbconsumer>
```

S304: The cloud service broker selects the proper cloud computing services and/or resources and the relative service logic and function modes, and executes the cloud service operation.

S306: The cloud service broker adapts the cloud services and/or resources provided by the cloud service provider.

S308: The cloud service broker returns a consumer response to the cloud service requester, and the cloud service consumer response can be carried in the cloud service consuming interface message packet.

The specific message format contents are as follows:

```
   Client < - CSB (consumer response)
   ------------------------------------------
   200 OK
   Message packet: csb-consumer
   Content-type: application/csb-consumer+xml
   <?xml version="1.0" encoding="UTF-8" standalone="yes"?>
   <csbconsumer version="1.0" xmlns="urn:ietf:params:xml:ns:csb-consumer">
       <CloudServiceResponse reason="Resource found" status="200">
   <session-info>
                  <session-id>OGX1jCYZ8WBa</session-id>
                <seq>1</seq>
   <expires>3600</expires>
           </session-info>
           <IaaS>
             ..................
           </IaaS>
           <DaaS>
             ..................
           </DaaS>
           <PaaS>
             ..................
           </PaaS>
           <SaaS>
             ..................
           </SaaS>
   </CloudServiceResponse>
   </csbconsumer>
```

The signaling flow of the cloud service access method in the embodiment is as shown in Fig. 4, comprising the following steps.

S402: A cloud service requester sends a cloud service consumer request to a cloud service broker; and the cloud service consumer request can be sent through the cloud service consuming interface message packet.

In the above, the cloud service consumer request comprises the cloud service information requested by the cloud service requester.

S404: The cloud service broker returns a cloud service consumer response to the cloud service requester; the cloud service consumer response can be returned through the cloud service consuming interface message packet.

In the above, the cloud service consumer response comprises cloud service information provided by the cloud service broker. That is, the cloud service broker has selected and/or adapted the information of the cloud computing services and/or resources provided by a proper cloud service provider for the cloud service requester. The information of the cloud computing services and/or resources provided by the proper cloud service provider can be real cloud computing services and/or resources of the cloud service provider, and also can be virtual cloud computing services and/or resources, i.e., cloud computing services and/or resources of the cloud service provider processed by the cloud service broker (such as the proxy service, transition service, porting service, shielding service, permutation service and synthesis service).

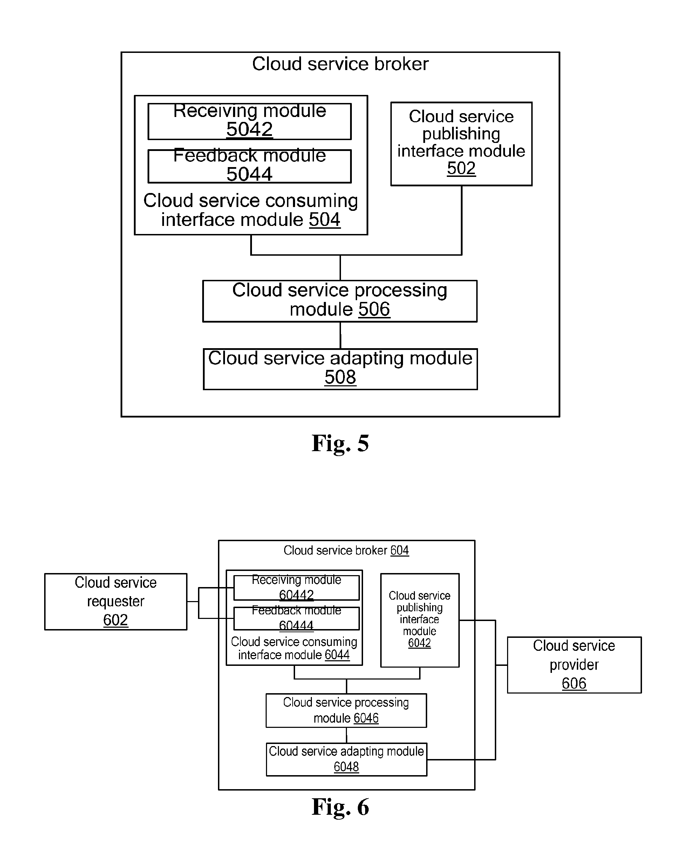

With reference to Fig. 5, a structure block diagram of a cloud service broker according to embodiments of this disclosure is illustrated, comprising:
a cloud service publishing interface module 502, configured to subscribe to the information of the cloud computing services and/or resources provided by a plurality of cloud service providers; a cloud service consuming interface module 504, configured to provide a consuming interface for the cloud service requester to access the cloud service provider; a cloud service processing module 506, configured to process the cloud service consumer request of the cloud service requester; and a cloud service adapting module 508, configured to adapt the cloud computing services and/or resources provided by the cloud service provider to the cloud service requester according to the cloud service consumer request.

In the above, the cloud service consuming interface module 504 is configured to realize the cloud service consuming between the cloud service requester and the cloud service broker, comprising: a receiving module 5042, configured to receive a cloud service consumer request sent by the cloud service requester, wherein the cloud service consumer request comprises cloud service information requested by the cloud service requester; and a feedback module 5044, configured to send a cloud service consumer response to the cloud service requester, wherein the cloud service consumer response comprises cloud service information provided by the cloud service broker, that is, the cloud service broker has selected and/or adapted the information of the cloud computing services and/or resources provided by a proper cloud service provider for the cloud service requester. The cloud computing services and/or resources provided by the proper cloud service provider can be real cloud computing services and/or resources of the cloud service provider, and also can be virtual cloud computing service and/or resource information, i.e., cloud computing service and/or resource information of the cloud service provider processed by the cloud service broker (such as the proxy service, transition service, porting service, shielding service, permutation service and synthesis service).

Preferably, the receiving module 5042 is configured to receive a cloud service consuming interface message packet sent by the cloud service requester, wherein the message packet carries the cloud service consumer request, and the cloud service consumer request comprises cloud service information requested by the cloud service requester. The feedback module 5044 is configured to return a cloud service consuming interface message packet to the cloud service requester, wherein the message packet carries the cloud service consumer response used for indicating cloud service information provided by the cloud service broker, i.e., the cloud computing services and/or resources provided by a cloud service provider that is selected and/or adapted by the cloud service broker for the cloud service requester.

Preferably, the cloud service consuming interface message packet comprises request information or response information. In the above, the request information comprises information of at least one of: session information, IaaS information, DaaS information, PaaS information, or SaaS information. And, the response information comprises information of at least one of: session information, IaaS information, DaaS information, PaaS information, or SaaS information.

Preferably, the cloud service consuming interface message packet is transmitted in at least one of the following ways: HTTP, SIP, REST, SOAP, XHTML5, API, or specific command. The information contents of the cloud service consuming interface message packet are described in at least one of the following formats: XML, JSON or other specific formats.

With reference to Fig. 6, a structure block diagram of a cloud system according to embodiments of this disclosure is illustrated, comprising: a cloud service requester 602, a cloud service broker 604 and a cloud service provider 606.

In the above, the cloud service requester 602 is configured to send a cloud service consumer request to a cloud service broker 604, wherein the cloud service consumer request can be carried in the cloud service consuming interface message packet and it comprises cloud service information requested by the cloud service requester; and receive a cloud service consumer response returned by the cloud service broker 604, wherein the cloud service consumer response is carried in the cloud service consuming interface massage packet and it comprises cloud service information provided by the cloud service broker 604, that is, the information of cloud computing services and/or resources provided by a proper cloud service provider that the cloud service broker has selected and/or adapted for the cloud service requester. The cloud computing services and/or resources provided by the proper cloud service provider can be real cloud computing services and/or resources of the cloud service provider, and also can be virtual cloud computing service and/or resource information, i.e., cloud computing service and/or resources information of the cloud service provider processed by the cloud service broker (such as the proxy service, transition service, porting service, shielding service, permutation service and synthesis service).

In the above, the cloud service broker 604 comprises: a cloud service publishing interface module 6042, configured to subscribe to the information of the cloud computing services and/or resources provided by a plurality of cloud service providers; a cloud service consuming interface module 6044, configured to provide a consuming interface for the cloud service requester 602 to access the cloud service provider 606; a cloud service processing module 6046, configured to process the cloud service consumer request of the cloud service requester 602; and a cloud service adapting module 6048, configured to adapt the cloud computing services and/or resources provided by the cloud service provider 606 to the cloud service requester 602 according to the cloud service consumer request.

In the above, the cloud service consuming interface module 6044 comprises: a receiving module 60442, configured to receive a cloud service consumer request sent by the cloud service requester 602, wherein the cloud service consumer request comprises cloud service information requested by the cloud service requester 602; and a feedback module 60444, configured to send a cloud service consumer response to the cloud service requester 602, wherein the cloud service consumer response comprises cloud service information provided by the cloud service broker 604.

In the above, the cloud service provider 606 is configured to publish its cloud service information to the cloud service broker 604, and provide the cloud service requested by the cloud service requester 602.

Preferably, the cloud service consuming interface message packet comprises request information or response information. In the above, the request information comprises information of at least one of: session information, IaaS information, DaaS information, PaaS information, and SaaS information; and the response information comprises information of at least one of: session information, IaaS information, DaaS information, PaaS information, and SaaS information.

Preferably, the cloud service consuming interface message packet is transmitted by using at least one of the following ways: HTTP, SIP, REST, SOAP, XHTML5, API, and specific command. The information contents of the cloud service consuming interface message packet are described in at least one of the following formats: XML, JSON and other specific formats.

Obviously, those skilled in the art should understand that the above modules or steps of this disclosure could be achieved through general calculating devices. They can be concentrated in a single calculating device or distributed in a network formed by multiple calculating devices. Optionally, they can be achieved by program codes that can be executed by calculating devices. Thus, they can be stored in storage devices to be executed by calculating devices. Under certain situation, the shown or described steps can be executed according to an order different from the above order. Or, they can be achieved by respectively making them into many integrated circuit modules or by making multiple modules or steps among them into a single integrated circuit module. In this way, this disclosure is not limited to combinations of any specific hardware and software.

Above contents are only preferred embodiments of this disclosure and are not used for limiting this disclosure. For those skilled in the art, this disclosure can have various alternations and changes. Any modifications, equivalent replacements and improvements within the spirit and principle of this disclosure should be contained within the protection scope of this disclosure.

## Claims

1. A cloud service consuming method, **characterized by** comprising:
a cloud service broker receiving a cloud service consumer request sent by a cloud service requester; and
the cloud service broker returning a cloud service consumer response to the cloud service requester.

2. The method according to claim 1, **characterized in that**
the step that the cloud service broker receiving the cloud service consumer request sent by the cloud service requester comprises:
the cloud service broker receiving a cloud service consuming interface message packet sent by the cloud service requester, wherein the cloud service consuming interface message packet carries the cloud service consumer request, and the cloud service consumer request comprises cloud service information requested by the cloud service requester; and
the step that the cloud service broker returning a cloud service consumer response to the cloud service requester comprises:
the cloud service broker returning a cloud service consuming interface message packet to the cloud service requester, wherein the cloud service consuming interface message packet carries the cloud service consumer response used for indicating cloud service information provided by the cloud service broker, and the cloud service information comprises information of cloud computing services and/or resources provided by a cloud service provider that is selected and/or adapted by the cloud service broker for the cloud service requester.

3. The method according to claim 1, **characterized in that** the method further comprises:
the cloud service requester accessing and/or controlling the cloud services provided by the cloud service provider through the cloud service broker, wherein the accessing and/or controlling of the cloud services provided by the cloud service provider comprises at least one mode of the following operations: creating, reading, updating, deleting, executing, copying, moving, selecting and collecting.

4. The method according to claim 2, **characterized in that** the cloud service consuming interface message packet comprises information of one of: request information and response information.

5. The method according to claim 4, **characterized in that** the cloud service consuming interface message packet is transmitted by using at least one mode of: Hyper Text Transport Protocol (HTTP) format, Session Initiation Protocol (SIP) format, Representational State Transfer (REST) format, Simple Object Access Protocol (SOAP) format, Extensible Markup Language (XML)-based Hypertext Markup Language Version 5 (XHTML5) format, Application Programming Interface (API) format, and specific command format.

6. The method according to claim 4, **characterized in that** information contents of the cloud service consuming interface message packet are described in at least one format of: XML format, JavaScript Serialized Object Notation (JSON) format and specific format.

7. A cloud service consuming interface message packet, applied in information interaction of cloud service consuming between a cloud service broker and a cloud service requester, **characterized by** comprising information of one of: request information or response information.

8. The cloud service consuming interface message packet according to claim 7, **characterized in that** the request information comprises information of at least one of: session information, Infrastructure as a Service (IaaS) information, Data Storage as a Service (DaaS) information, Platform as a Service (PaaS) information, and Software as a Service (SaaS) information.

9. The cloud service consuming interface message packet according to claim 7, **characterized in that** the response information comprises information of at least one of: session information, IaaS information, DaaS information, PaaS information, and SaaS information.

10. The cloud service consuming interface message packet according to any one of claims 7 to 9, **characterized in that** the cloud service consuming interface message packet is transmitted by using at least one mode of: HTTP format, SIP format, REST format, SOAP format, XHTML5 format, API format, and specific command format.

11. The cloud service consuming interface message packet according to any one of claims 7 to 9, **characterized in that** information contents of the cloud service consuming interface message packet are described in at least one format of: XML format, JavaScript Serialized Object Notation (JSON) format and specific format.

12. A cloud service broker, **characterized by** comprising:
a cloud service consuming interface module, configured to realize cloud service consuming between a cloud service requester and the cloud service broker, comprising:
a receiving module, configured to receive a cloud service consumer request sent by the cloud service requester; and
a feedback module, configured to send a cloud service consumer response to the cloud service requester, wherein the cloud service consumer response comprises cloud service information provided by the cloud service broker.

13. The cloud service broker according to claim 12, **characterized in that**
the receiving module is configured to receive a cloud service consuming interface message packet sent by the cloud service requester, wherein the cloud service consuming interface message packet carries the cloud service consumer request, and the cloud service consumer request comprises the cloud service information requested by the cloud service requester; and
the feedback module is configured to return a cloud service consuming interface message packet to the cloud service requester, wherein the cloud service consuming interface message packet carries the cloud service consumer response used for indicating the cloud service information provided by the cloud service broker, and the cloud service information comprises information of cloud computing services and/or resources provided by a cloud service provider that is selected and/or adapted by the cloud service broker for the cloud service requester.

14. The cloud service broker according to claim 13, **characterized in that** the cloud service consuming interface message packet comprises request information and response information.

15. The cloud service broker according to claim 14, **characterized in that** the request information comprises information of at least one of: session information, Infrastructure as a Service (IaaS) information, Data Storage as a Service (DaaS) information, Platform as a Service (PaaS) information, and Software as a Service (SaaS) information; and
the response information comprises information of at least one of: session information, IaaS information, DaaS information, PaaS information, and SaaS information.

16. The cloud service broker according to any one of claims 13 to 15, **characterized in that** the cloud service consuming interface message packet is transmitted by using at least one mode of: Hyper Text Transport Protocol (HTTP) format, Session Initiation Protocol (SIP) format, Representational State Transfer (REST) format, Simple Object Access Protocol (SOAP) format, Extensible Markup Language (XML)-based Hypertext Markup Language Version 5 (XHTML5) format, Application Programming Interface (API) format, and specific command format; and
information contents of the cloud service consuming interface message packet are described in at least one format of: XML format, JavaScript Serialized Object Notation (JSON) format and specific format.

17. A cloud system, **characterized by** comprising:
a cloud service requester, configured to send a cloud service consumer request to a cloud service broker, wherein the cloud service consumer request comprises cloud service information requested by the cloud service requester; and receive a cloud service consumer response returned by the cloud service broker, wherein the cloud service consumer response comprises cloud service information provided by the cloud service broker; and
the cloud service broker, comprising:
a cloud service publishing interface module, configured to subscribe to information of cloud computing services and/or resources provided by a plurality of cloud service providers;
a cloud service consuming interface module, configured to provide a consuming interface for the cloud service requester to access the cloud service provider;
a cloud service processing module, configured to process the cloud service consumer request of the cloud service requester;
a cloud service adapting module, configured to adapt the cloud computing services and/or resources provided by the cloud service provider to the cloud service requester according to the cloud service consumer request; and
the cloud service provider, configured to publish the cloud service information of the cloud service to the cloud service broker, and provide the cloud service needed by the cloud service requester.

18. The cloud system according to claim 17, **characterized in that** the cloud service consuming interface module comprises:
a receiving module, configured to receive the cloud service consumer request sent by the cloud service requester, wherein the cloud service consumer request comprises the cloud service information requested by the cloud service requester; and
a feedback module, configured to send the cloud service consumer response to the cloud service requester, wherein the cloud service consumer response comprises the cloud service information provided by the cloud service broker.
